# EUROPÄISCHE PATENTSCHRIFT

(11) **EP 2 734 311 B1**
(45) Veröffentlichungstag und Bekanntmachung des Hinweises auf die Patenterteilung: **23.09.2015**
(21) Anmeldenummer: 12738091.3
(22) Anmeldetag: 16.07.2012
(51) Int. Cl.: G01J 1/02, B05D 3/06, F26B 13/00, G01J 1/42, F26B 3/28, F26B 13/10

(54) **BESTRAHLUNGSVORRICHTUNG ZUR UV-STRAHLUNGSBEHANDLUNG**
IRRADIATION APPARATUS FOR UV RADIATION TREATMENT
DISPOSITIF D'IRRADIATION POUR LE TRAITEMENT PAR RAYONNEMENT UV

(30) Priorität: 21.07.2011 DE 102011079531
(43) Veröffentlichungstag der Anmeldung: 28.05.2014
(73) Patentinhaber: IST METZ GmbH, 72622 Nürtingen (DE)
(72) Erfinder: KRETZSCHMAR-BAREIß, Robert, 73553 Alfdorf (DE); TREICHEL, Oliver, 70186 Stuttgart (DE); CREMER, Ruben, 72658 Bempflingen (DE); EBINGER, Klaus, 73249 Wernau (DE)
(74) Vertreter: Pfiz, Thomas
(86) Internationale Anmeldenummer: PCT/EP2012/063926
(87) Internationale Veröffentlichungsnummer: WO 2013/010996

(56) Entgegenhaltungen:
- WO-A1-2007/135063
- WO-A1-2012/009353
- DE-A1- 4 009 826
- US-A1- 2007 287 091
- US-A1- 2011 168 898
- US-B1- 7 382 454

## Beschreibung

Die Erfindung betrifft eine Bestrahlungsvorrichtung zur UV-Strahlungsbehandlung von insbesondere bahnförmigen Objekten mit einer vorzugsweise als Gasentladungsröhre ausgebildeten UV-Lampe, einem die UV-Lampe bereichsweise umgreifenden Reflektor zur Strahlungsreflexion auf das zu bestrahlende Objekt und einer Sensoreinrichtung zur Strahlungserfassung.

Die UV-Trocknung und Vernetzung von Lacken, Farben sowie Klebstoffen unter Ausnutzung des Energieinhalts von Lichtquanten im UV-Lichtbereich mit Hilfe von lang gestreckten Mitteldruck-Gasentladungslampen findet seit über 30 Jahren breiten industriellen Einsatz in der Druck-, Verpackungs- und Oberflächenindustrie. Lösemittelfreiheit beim Prozess und die Erreichbarkeit hoher Vernetzungsdichten bei Bearbeitungszeiten im Durchlauf von Bruchteilen einer Sekunde sind die hauptsächlichen Merkmale dieser Technik. Mitteldruck-Gasentladungslampen emittieren Licht vom kurzwelligen UV über den sichtbaren Bereich bis hin zum langwelligen IR. Die Wirkung des Reflektors bei solchen UV-Aggregaten ist nicht zu unterschätzen. Je nach Form und Geometrie beträgt sein Anteil an der auf dem Substrat wirksamen Gesamtemission 50 bis 90%. Problematisch ist allerdings die Gewährleistung einer gleichbleibenden Bestrahlungsleistung, insbesondere bei zunehmender Verschmutzung des Reflektors und Alterung der Lampe. In diesem Zusammenhang wurde bereits vorgeschlagen, mobile UV-Sensoren für intermittierende Kontrollen als Sonden in den Bestrahlungsraum einzuführen.

Solch eine sensorgesteuerte Belichtungsvorrichtung ist beispielsweise aus der US 2007/287091 A1 bekannt.

Ausgehend hiervon liegt der Erfindung die Aufgabe zugrunde, eine Vorrichtung der eingangs angegebenen Art dahingehend zu verbessern, dass die im Stand der Technik aufgetretenen Nachteile vermieden werden und eine zuverlässige Bestrahlungskontrolle für gleichbleibende Bedingungen und eine hohe Produktqualität erreicht werden.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, eine kontinuierliche Überwachung des Produktionsprozesses mit einfachen Mitteln zu ermöglichen. Dementsprechend wird erfindungsgemäß vorgeschlagen, dass die Sensoreinrichtung mindestens einen in den Reflektor integrierten und auf die UV-Lampe ausgerichteten Strahlungssensor aufweist. Auf diese Weise ist es möglich, das Betriebsverhalten von Lampe und Reflektor zugleich zu erfassen, wobei die Information im laufenden Betrieb Online direkt erfasst wird. Ein weiterer besonderer Vorteil der integrierten Sensoranordnung liegt darin, dass die wesentliche Alterung bzw. Verschmutzung oder Reinigung des Reflektors von dem Sensor in der Reflektorfläche gleichsam miterlebt wird, so dass die Messgröße direkt auf diese Historie bezogen ist.

Vorteilhafterweise ist der Strahlungssensor flächenbündig in die der UV-Lampe zugewandte Reflektoroberfläche des Reflektors eingesetzt, um die Beeinflussung der Reflektoroberfläche in gleicher Weise zu erfahren und die Lampenstrahlung in einem von dem Objekt abgewandten Bereich direkt erfassen zu können.

Um die Bestrahlungshomogenität möglichst nicht zu stören, sollte das Messfenster mehrere Größenordnungen kleiner als der Reflektor sein. Hier ist es günstig, wenn die mit Strahlung beaufschlagte Oberfläche des Strahlungssensors weniger als 100 mm², vorzugsweise weniger als 50 mm² beträgt. Bevorzugt beträgt der Durchmesser des Messfensters ca. 5 mm.

Um eine möglichst diffuse und homogene Beleuchtung des Strahlungssensors sicherzustellen, ist es von Vorteil, wenn der Strahlungssensor einen stirnseitig auf die UV-Lampe ausgerichteten Tubus für den Strahlungseinlass aufweist.

Zur weitgehend integralen Eingliederung an die Reflektorfläche ist es vorteilhaft, wenn der Strahlungssensor ein in der Reflektoroberfläche eingefasstes und für die zu erfassende Lampenstrahlung durchlässiges Eintrittsfenster vorzugsweise aus Quarzglas oder einem Halbleitermaterial aufweist.

Eine vorteilhafte Ausgestaltung sieht vor, dass der Reflektor insbesondere als Klappreflektor aus zwei Reflektorhälften gebildet ist, und dass der Strahlungssensor in einem Spaltbereich zwischen den Reflektorhälften angeordnet ist.

Für ein möglichst robustes und alterungsfreies Sensordesign ist es von Vorteil, wenn der Strahlungssensor ein durch eine Lochscheibe oder ein Gitter gebildetes Lochfilter zur Abschwächung und Homogenisierung der eintretenden Lampenstrahlung aufweist.

Zur direkten Erfassung der UV-Strahlung kann der Strahlungssensor einen UV-Strahlung erfassenden Fotoempfänger, insbesondere eine Fotodiode aufweisen. Alternativ oder ergänzend ist es auch möglich, die Lampentemperatur zu bestimmen, indem der Strahlungssensor einen Infrarotstrahlung erfassenden pyrometrischen Strahlungsfühler aufweist. Für eine möglichst umfassende Kontrolle ist es günstig, wenn ein erster Strahlungssensor für UV-Strahlung und ein zweiter Strahlungssensor für IR-Strahlung gemeinsam in den Reflektor integriert sind.

Eine weitere Verbesserung hinsichtlich einer ungestörten Temperaturmessung lässt sich dadurch erreichen, dass der Strahlungssensor zur Erfassung von IR-Strahlung in einem Messwellenlängenbereich von beispielsweise 8 bis 12 µm ausgelegt ist, und dass die UV-Lampe ein für IR-Strahlung in dem Messwellenlängenbereich weitgehend undurchlässiges Hüllrohr aufweist, so dass Strahlung aus dem Lampeninneren die Messung nicht beeinträchtigt.

Vorteilhafterweise besitzt die Sensoreinrichtung eine Signalverarbeitungseinheit zum Vergleich der von dem Strahlungssensor erfassten Strahlungsintensität mit der elektrischen Leistungsaufnahme der UV-Lampe, so dass eine direkte Effizienzkontrolle möglich ist.

Für eine vereinfachte Bedienung und Wartung ist es vorteilhaft, wenn die Sensoreinrichtung eine Anzeige für die Alterung der UV-Lampe und/oder des Reflektors insbesondere nach Art eines Ampelsignals aufweist.

Zur Gewährleistung der Betriebssicherheit ist es auch von Vorteil, wenn die Sensoreinrichtung eine Warneinheit zur Signalisierung eines irregulären Betriebszustandes, insbesondere einer Überhitzung der UV-Lampe aufweist.

Gemäß einer weiteren vorteilhaften Ausgestaltung ist eine Regeleinrichtung zur Regelung der Leistungsaufnahme der UV-Lampe nach Maßgabe der mittels des Strahlungssensors erfassten Lampenstrahlung vorgesehen.

Im Folgenden wird die Erfindung anhand eines in der Zeichnung schematisch dargestellten Ausführungsbeispiels näher erläutert. Es zeigen
- Fig. 1: ein UV-Bestrahlungsaggregat zur Strahlungsbehandlung von Druckbahnen mit integriertem Strahlungssensor in perspektivischer Darstellung;
- Fig. 2: einen Teilabschnitt des Bestrahlungsaggregats im Bereich des Strahlungssensors in perspektivischer Darstellung;
- Fig. 3: eine den Strahlungssensor umfassende Sensoreinrichtung in ausschnittsweiser Vergrößerung der Fig. 2; und
- Fig. 4: ein Blockschaltbild des Bestrahlungsaggregats in Verbindung mit einer Sensoreinrichtung und Lampenregelung.

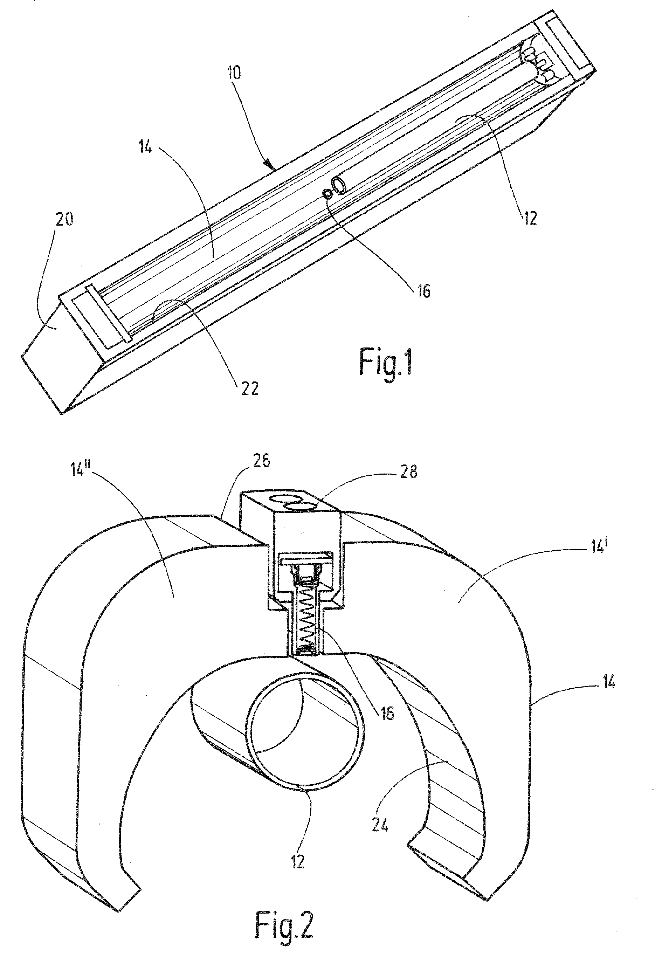

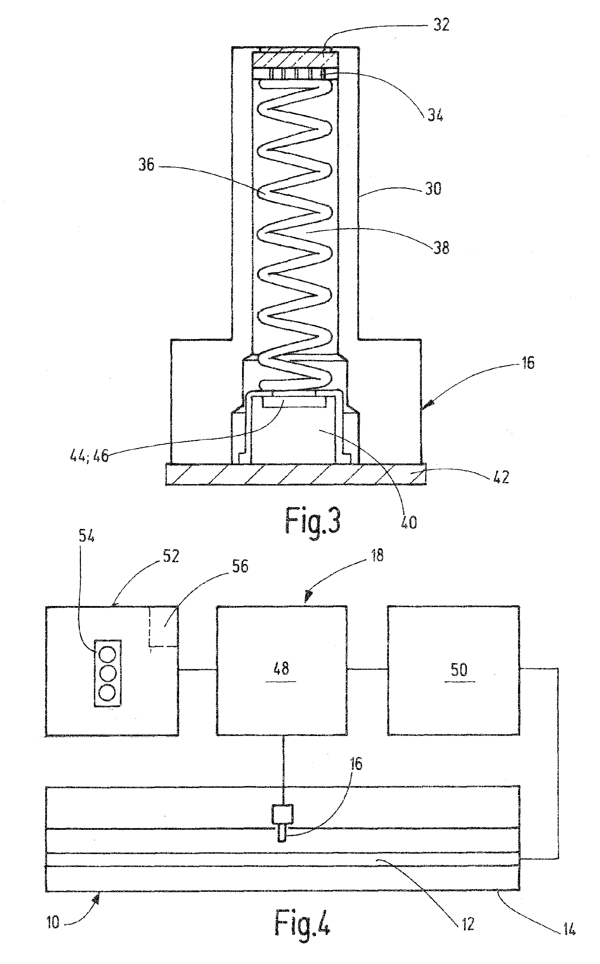

Das in Fig. 1 dargestellte UV-Bestrahlungsaggregat 10 lässt sich beispielsweise in einer Druckmaschine zur Strahlungsbehandlung bzw. -trocknung von Druckfarben oder Lacken auf einer Substratbahn einsetzen. Das Aggregat 10 umfasst eine UV-Lampe 12, einen die UV-Lampe 12 C-förmig umgreifenden Reflektor 14 und einen in den Reflektor integrierten Strahlungssensor 16 als Element einer in Fig. 4 gezeigten Sensoreinrichtung 18 zur direkten Erfassung der Lampenstrahlung im UV- und/oder IR-Bereich.

Die in Fig. 1 nur abschnittsweise gezeigte UV-Lampe 12 erstreckt sich als zweiendige Mitteldruck-Gasentladungsröhre axial über die Länge eines langgestreckten kastenförmigen Gehäuses 20 und gibt ihre Strahlung über eine Gehäuseöffnung 22 auf die daran vorbeigeführte Substratbahn bzw. das zu bestrahlende Objekt ab. Um die Bestrahlung des Objekts zu erhöhen, ist die UV-Lampe 12 in ihrem in das Gehäuseinnere weisenden Sektor von der Reflektor 14 umgeben, wobei das reflektierte Licht je nach Reflektorgeometrie divergent, parallel oder gebündelt durch die Gehäuseöffnung 22 hindurch abgestrahlt wird.

Wie auch aus Fig. 2 ersichtlich, ist der Strahlungssensor 16 flächenbündig bzw. stufenlos in die der UV-Lampe 12 zugewandte Reflektoroberfläche 24 des Reflektors 14 eingesetzt. Somit erfasst der Strahlungssensor 16 die Lampenemission unmittelbar und Online im Betriebszustand. Dabei beträgt die mit Strahlung beaufschlagte Ober- bzw. Stirnfläche des Strahlungssensors 16 nur einige 10 mm² bei einer Lampenlänge von mehr als 1 m, so dass nur ein vernachlässigbarer Bruchteil der Reflektoroberfläche 24 durchbrochen wird und die Homogenität der Bestrahlung weitgehend erhalten bleibt.

Der Strahlungssensor 16 ist zweckmäßig in einen Querschnittsbereich des aus Profilabschnitten gebildeten Reflektors 14 integriert. Beispielsweise kann der Reflektor 14 als vor der Gehäuseöffnung 22 schließbarer Klappreflektor aus zwei Reflektorhälften 14', 14" gebildet sein, zwischen denen der Reflektor 16 in einem Spaltbereich 26 angeordnet ist. Eine Tragstruktur 28 für den Strahlungssensor 16 ermöglich eine einfache Schraubmontage an einer den Reflektor 14 rückseitig überspannenden, nicht gezeigten Kühlschiene.

Gemäß Fig. 3 weist der Strahlungssensor 16 einen auf die UV-Lampe ausgerichteten zylindrischen Tubus 30 für den Strahlungsempfang auf. Dieser umfasst an seinem in die Reflektoroberfläche 24 integrierten Stirnende ein formschlüssig abgestuftes Eintrittsfenster 32 aus Quarzglas oder einem Halbleitermaterial. Hinter diesem Eintrittsfenster 32 befindet sich eine Lochscheibe 34 zur Abschwächung und Homogenisierung der eintretenden Lampenstrahlung. Die Lochscheibe 34 kann aus einem dünnen Edelstahlblech bestehen, in das eine Vielzahl von Löchern mit etwa 100 µm Durchmesser eingebracht sind. Die Lochscheibe 34 wird durch eine Schraubenfeder 36 abgestützt, die einen zentralen Durchlasskanal 38 für den Strahlungsdurchtritt freihält. An dessen von dem Eintrittsfenster entfernten Ende ist ein Strahlungsdetektor 40 auf einer Elektronikplatine 42 angeordnet.

Der Strahlungsempfänger 40 kann eine UV-Strahlung erfassende Fotodiode 44 oder einen Infrarotstrahlung erfassenden pyrometrischen Strahlungsfühler 46 aufweisen. Möglich ist es auch, dass ein UV-Strahlungssensor für UV-Strahlung und ein IR-Strahlungssensor für IR-Strahlung jeweils in der beschriebenen Bauform in den Reflektor 14 integriert sind. Durch eine UV-Fotodiode 44 kann somit die tatsächliche UV-Emission der UV-Lampe 12 im Betrieb kontinuierlich erfasst werden. Im Falle der Infrarotmessung sollte der Strahlungsfühler 46 in einem bestimmten Messwellenlängenbereich von beispielsweise 8 bis 12 µm empfindlich sein, in welchem das Quarzglas-Hüllrohr der UV-Lampe 12 weitgehend undurchlässig ist, so dass die Lampenoberflächentemperatur als Betriebsparameter ohne verfälschende Strahlungsanteile genau bestimmbar ist.

Wie in Fig. 4 veranschaulicht, umfasst die Sensoreinrichtung 18 eine Kontroll- bzw. Signalverarbeitungseinheit 48 zum Vergleich der von dem Strahlungssensor 16 erfassten Strahlungsintensität mit der elektrischen Leistungsaufnahme der über ein Regelungsgerät 50 angesteuerten UV-Lampe 12. Somit kann die Effizienz des UV-Bestrahlungsaggregats 10 unabhängig von der jeweils eingestellten Lampenleistung aus dem Verhältnis von Strahlungsintensität zu elektrischer Leistung ermittelt werden.

Entsprechend kann die Notwendigkeit für eine Reinigung oder einen Austausch der UV-Lampe 12 und/oder des Reflektors 14 mittels einer Anzeige 52 ggf. nach Art eines Ampelsignals angezeigt werden. Zu diesem Zweck wird der Strahlungssensor 16 bei der Inbetriebnahme des Aggregats 10 kalibriert: Eine neue UV-Lampe 12 und ein neuer Reflektor 14 stellen den Referenzwert für die volle Leistungsfähigkeit dar, unabhängig davon, mit welcher eingestellten Lampenleistung aktuell bestrahlt wird. Wenn der Reflektor 14 verschmutzt oder die UV-Lampe 12 altert, sinkt dieser Momentanwert und wird im Verhältnis zum Referenzwert als Ampelsignal 54 mit grünen, gelben und roten Stufen vereinfacht dargestellt. Möglich ist es auch, dass durch eine geeignete Ansteuerung des Regelgeräts 50 die Leistungsaufnahme der UV-Lampe 12 in Abhängigkeit von der mittels des Strahlungssensors 16 erfassten UV-Lampenstrahlung geregelt wird. Eine weitere Überwachungsmöglichkeit mittels Infrarotmessung besteht darin, dass über die Messung der Lampenoberflächentemperatur ein irregulärer Betriebszustand, insbesondere einer Überhitzung der UV-Lampe 12 erkannt und durch eine Warneinheit 56 einer Bedienperson signalisiert werden kann.

## Patentansprüche

1. Bestrahlungsvorrichtung zur UV-Strahlungsbehandlung von insbesondere bahnförmigen Objekten mit einer als Gasentladungsröhre ausgebildeten UV-Lampe (12), einem die UV-Lampe (12) bereichsweise umgreifenden Reflektor (14) zur Strahlungsreflexion auf das zu bestrahlende Objekt und einer Sensoreinrichtung (18) zur Strahlungserfassung, **dadurch gekennzeichnet, dass** die Sensoreinrichtung (18) mindestens einen in den Reflektor (14) integrierten und auf die UV-Lampe (12) ausgerichteten Strahlungssensor (16) aufweist.

2. Bestrahlungsvorrichtung nach Anspruch 1, **dadurch gekennzeichnet, dass** der Strahlungssensor (16) flächenbündig in die der UV-Lampe (12) zugewandte Reflektoroberfläche (24) des Reflektors (14) eingesetzt ist.

3. Bestrahlungsvorrichtung nach Anspruch 1 oder 2, **dadurch gekennzeichnet, dass** die mit Strahlung beaufschlagte Oberfläche des Strahlungssensors (16) weniger als 100 mm², vorzugsweise weniger als 50 mm² beträgt.

4. Bestrahlungsvorrichtung nach einem der Ansprüche 1 bis 3, **dadurch gekennzeichnet, dass** der Strahlungssensor (16) einen stirnseitig auf die UV-Lampe (12) ausgerichteten Tubus (30) für den Strahlungseinlass aufweist.

5. Bestrahlungsvorrichtung nach einem der Ansprüche 1 bis 4, **dadurch gekennzeichnet, dass** der Strahlungssensor (16) ein in der Reflektoroberfläche (24) eingefasstes und für die zu erfassende Lampenstrahlung durchlässiges Eintrittsfenster (32) vorzugsweise aus Quarzglas oder einem Halbleitermaterial aufweist.

6. Bestrahlungsvorrichtung nach einem der Ansprüche 1 bis 5, **dadurch gekennzeichnet, dass** der Reflektor (14) insbesondere als Klappreflektor aus zwei Reflektorhälften (14',14") gebildet ist, und dass der Strahlungssensor (16) in einem Spaltbereich (26) zwischen den Reflektorhälften (14', 14") angeordnet ist.

7. Bestrahlungsvorrichtung nach einem der Ansprüche 1 bis 6, **dadurch gekennzeichnet, dass** der Strahlungssensor (16) ein durch eine Lochscheibe oder ein Gitter gebildetes Lochfilter (34) zur Abschwächung und Homogenisierung der eintretenden Lampenstrahlung aufweist.

8. Bestrahlungsvorrichtung nach einem der Ansprüche 1 bis 7, **dadurch gekennzeichnet, dass** der Strahlungssensor (16) einen UV-Strahlung erfassenden Fotoempfänger (40), insbesondere eine Fotodiode (44) aufweist.

9. Bestrahlungsvorrichtung nach einem der Ansprüche 1 bis 7, **dadurch gekennzeichnet, dass** der Strahlungssensor (16) einen Infrarotstrahlung erfassenden pyrometrischen Strahlungsfühler (46) aufweist.

10. Bestrahlungsvorrichtung nach einem der Ansprüche 1 bis 9, **dadurch gekennzeichnet, dass** ein erster Strahlungssensor (16;44) für UV-Strahlung und ein zweiter Strahlungssensor (16;46) für IR-Strahlung gemeinsam in den Reflektor (14) integriert sind.

11. Bestrahlungsvorrichtung nach einem der Ansprüche 1 bis 10, **dadurch gekennzeichnet, dass** der Strahlungssensor (16;46) zur Erfassung von IR-Strahlung in einem Messwellenlängenbereich von beispielsweise 8 bis 12 µm ausgelegt ist, und dass die UV-Lampe (12) ein für IR-Strahlung in dem Messwellenlängenbereich weitgehend undurchlässiges Hüllrohr aufweist.

12. Bestrahlungsvorrichtung nach einem der Ansprüche 1 bis 11, **dadurch gekennzeichnet, dass** die Sensoreinrichtung (18) eine Signalverarbeitungseinheit (48) zum Vergleich der von dem Strahlungssensor (16) erfassten Strahlungsintensität mit der elektrischen Leistungsaufnahme der UV-Lampe (12) aufweist.

13. Bestrahlungsvorrichtung nach einem der Ansprüche 1 bis 12, **dadurch gekennzeichnet, dass** die Sensoreinrichtung (18) eine Anzeige (52) für die Alterung der UV-Lampe (12) und/oder des Reflektors (14) insbesondere nach Art eines Ampelsignals (54) aufweist.

14. Bestrahlungsvorrichtung nach einem der Ansprüche 1 bis 13, **dadurch gekennzeichnet, dass** die Sensoreinrichtung (18) eine Warneinheit (56) zur Signalisierung eines irregulären Betriebszustandes, insbesondere einer Überhitzung der UV-Lampe (12) aufweist.

15. Bestrahlungsvorrichtung nach einem der Ansprüche 1 bis 14, **gekennzeichnet durch** eine Regeleinrichtung (50) zur Regelung der Leistungsaufnahme der UV-Lampe (12) nach Maßgabe der mittels des Strahlungssensors (16) erfassten Lampenstrahlung.

## Claims

1. Irradiation apparatus for UV radiation treatment of in particular web-shaped objects, having a UV lamp (12) configured as a gas discharge tube, a reflector (14) that sectionally surrounds the UV lamp (12) for reflecting radiation onto the object to be irradiated, and a sensor device (18) for capturing radiation, **characterized in that** the sensor device (18) has at least one radiation sensor (16) which is integrated in the reflector (14) and aligned with the UV lamp (12).

2. Irradiation apparatus according to Claim 1, **characterized in that** the radiation sensor (16) is inserted into the reflector surface (24) of the reflector (14) that faces the UV lamp (12) in a manner such that the radiation sensor (16) is flush with the surface.

3. Irradiation apparatus according to Claim 1 or 2, **characterized in that** the irradiated surface of the radiation sensor (16) has an area of less than 100 mm², preferably less than 50 mm².

4. Irradiation apparatus according to one of Claims 1 to 3, **characterized in that** the radiation sensor (16) has a tube (30), which is aligned at the end face with the UV lamp (12), for letting in radiation.

5. Irradiation apparatus according to one of Claims 1 to 4, **characterized in that** the radiation sensor (16) has an entry window (32), preferably composed of quartz glass or a semiconductor material, which entry window (32) is enclosed in the reflector surface (24) and transmissive for the lamp radiation to be captured.

6. Irradiation apparatus according to one of Claims 1 to 5, **characterized in that** the reflector (14) is configured in particular as a folding reflector made of two reflector halves (14', 14"), and **in that** the radiation sensor (16) is arranged in a gap region (26) between the reflector halves (14', 14").

7. Irradiation apparatus according to one of Claims 1 to 6, **characterized in that** the radiation sensor (16) has a pinhole filter (34), formed by a perforated disc or a grating, for attenuating and homogenizing the incoming lamp radiation.

8. Irradiation apparatus according to one of Claims 1 to 7, **characterized in that** the radiation sensor (16) has a photoreceiver (40), in particular a photodiode (44), which captures UV radiation.

9. Irradiation apparatus according to one of Claims 1 to 7, **characterized in that** the radiation sensor (16) has a pyrometric radiation sensing means (46) which captures infrared radiation.

10. Irradiation apparatus according to one of Claims 1 to 9, **characterized in that** a first radiation sensor (16; 44) for UV radiation and a second radiation sensor (16; 46) for IR radiation are integrated together in the reflector (14).

11. Irradiation apparatus according to one of Claims 1 to 10, **characterized in that** the radiation sensor (16; 46) is designed for capturing IR radiation in a measurement wavelength range from, for example, 8 to 12 µm, and **in that** the UV lamp (12) has a cladding tube which is largely impermeable for IR radiation in the measurement wavelength range.

12. Irradiation apparatus according to one of Claims 1 to 11, **characterized in that** the sensor device (18) has a signal processing unit (48) for comparing the radiation intensity captured by the radiation sensor (16) to the power consumption of the UV lamp (12).

13. Irradiation apparatus according to one of Claims 1 to 12, **characterized in that** the sensor device (18) has a display (52) for the ageing of the UV lamp (12) and/or of the reflector (14) in particular of the type of a traffic light system (54).

14. Irradiation apparatus according to one of Claims 1 to 13, **characterized in that** the sensor device (18) has a warning unit (56) for signalling an irregular operating condition, in particular overheating of the UV lamp (12).

15. Irradiation apparatus according to one of Claims 1 to 14, **characterized by** a regulation device (50) for regulating the power consumption of the UV lamp (12) in accordance with the lamp radiation captured by the radiation sensor (16).

## Revendications

1. Dispositif d'irradiation pour le traitement par rayonnement UV d'objets notamment en forme de bande, comprenant une lampe UV (12) réalisée sous forme de tube à décharge gazeuse, un réflecteur (14) entourant partiellement la lampe UV (12) pour la réflexion du rayonnement sur l'objet à irradier, et un dispositif détecteur (18) pour la détection du rayonnement, **caractérisé en ce que** le dispositif détecteur (18) présente au moins un détecteur de rayonnement (16) intégré dans le réflecteur (14) et dirigé sur la lampe UV (12).

2. Dispositif d'irradiation selon la revendication 1, **caractérisé en ce que** le détecteur de rayonnement (16) est installé à fleur de la surface de réflecteur (24) tournée vers la lampe UV (12) du réflecteur (14).

3. Dispositif d'irradiation selon la revendication 1 ou 2, **caractérisé en ce que** la surface exposée au rayonnement du détecteur de rayonnement (16) est inférieure à 100 mm², de préférence inférieure à 50 mm².

4. Dispositif d'irradiation selon l'une des revendications 1 à 3, **caractérisé en ce que** le détecteur de rayonnement (16) présente un tube (30) dirigé avec sa face frontale sur la lampe UV (12), pour permettre l'entrée du rayonnement.

5. Dispositif d'irradiation selon l'une des revendications 1 à 4, **caractérisé en ce que** le détecteur de rayonnement (16) présente une fenêtre d'entrée (32) sertie dans la surface de réflecteur (24) et perméable au rayonnement de la lampe à détecter, de préférence en verre de quartz ou en un matériau semi-conducteur.

6. Dispositif d'irradiation selon l'une des revendications 1 à 5, **caractérisé en ce que** le réflecteur (14) est formé notamment comme réflecteur rabattable par deux moitiés de réflecteur (14', 14"), et **en ce que** le détecteur de rayonnement (16) est disposé dans une zone interstitielle (26) entre les moitiés de réflecteur (14', 14").

7. Dispositif d'irradiation selon l'une des revendications 1 à 6, **caractérisé en ce que** le détecteur de rayonnement (16) présente un filtre à trous (34) formé par un disque à trous ou une grille, pour atténuer ou homogénéiser le rayonnement entrant de la lampe.

8. Dispositif d'irradiation selon l'une des revendications 1 à 7, **caractérisé en ce que** le détecteur de rayonnement (16) présente un photorécepteur (40) détectant le rayonnement UV, notamment une photodiode (44).

9. Dispositif d'irradiation selon l'une des revendications 1 à 7, **caractérisé en ce que** le détecteur de rayonnement (16) présente une sonde de rayonnement pyrométrique (46) détectant le rayonnement infrarouge.

10. Dispositif d'irradiation selon l'une des revendications 1 à 9, **caractérisé en ce qu'**un premier détecteur de rayonnement (16 ; 44) pour le rayonnement UV et un second détecteur de rayonnement (16 ; 46) pour le rayonnement IR sont intégrés ensemble dans le réflecteur (14).

11. Dispositif d'irradiation selon l'une des revendications 1 à 10, **caractérisé en ce que** le détecteur de rayonnement (16 ; 46) est configuré pour la détection du rayonnement IR dans une plage de longueurs d'onde de mesure de 8 à 12 µm par exemple, et **en ce que** la lampe UV (12) présente un tube de protection largement imperméable au rayonnement IR dans ladite plage de longueurs d'onde de mesure.

12. Dispositif d'irradiation selon l'une des revendications 1 à 11, **caractérisé en ce que** le dispositif détecteur (18) présente une unité de traitement de signal (48) pour comparer l'intensité du rayonnement détectée par le détecteur de rayonnement (16) avec la puissance électrique consommée de la lampe UV (12).

13. Dispositif d'irradiation selon l'une des revendications 1 à 12, **caractérisé en ce que** le dispositif détecteur (18) présente un dispositif d'affichage (52) pour afficher le vieillissement de la lampe UV (12) et/ou du réflecteur (14) notamment à la manière d'un feu de signalisation (54).

14. Dispositif d'irradiation selon l'une des revendications 1 à 13, **caractérisé en ce que** le dispositif détecteur (18) présente une unité d'avertissement (56) pour signaler un état de fonctionnement irrégulier, notamment une surchauffe de la lampe UV (12).

15. Dispositif d'irradiation selon l'une des revendications 1 à 14, **caractérisé par** un dispositif régulateur (50) pour réguler la puissance absorbée de la lampe UV (12) selon le rayonnement de la lampe détecté au moyen du détecteur de rayonnement (16).
